# EUROPÄISCHE PATENTSCHRIFT

(11) **EP 1 491 247 B1**
(45) Veröffentlichungstag und Bekanntmachung des Hinweises auf die Patenterteilung: **01.04.2009**
(21) Anmeldenummer: 03014671.6
(22) Anmeldetag: 27.06.2003
(51) Int. Cl.: B01D 29/90, B01D 29/52

(54) **Filter für die Anschwemmfiltration, Einlaufverteiler für einen solchen Filter sowie Verfahren zur Regulierung des Strömungsverhaltens in einem solchen Filter**
Precoat filter, inlet distributor for a precoat filter and method for controlling the fluid flow in such a filter
Filtre à précouche, distributeur d'entrée pour filtre à précouche et procédé pour la régulation du flux dans un tel filtre

(43) Veröffentlichungstag der Anmeldung: 29.12.2004
(73) Patentinhaber: Filtrox AG, 9000 St. Gallen (CH)
(72) Erfinder: Gans, Ulrich, 9214 Kradolf-Schönenberg (CH); Loser, Werner, 9242 Oberuzwil (CH)
(74) Vertreter: Hepp, Dieter

(56) Entgegenhaltungen:
- EP-A- 0 264 703
- EP-A- 1 000 647
- CH-A- 688 265
- PATENT ABSTRACTS OF JAPAN vol. 009, no. 175 (C-292), 19. Juli 1985 (1985-07-19) & JP 60 048108 A (HITACHI SEISAKUSHO KK), 15. März 1985 (1985-03-15)

## Beschreibung

Die Erfindung betrifft einen Filter für die Anschwemmfiltration, einen Einlaufverteiler für einen solchen Filter sowie ein Verfahren zur Regulierung des Strömungsverhaltens in einem solchen Filter. Derartige Anschwemmfilter werden vor allem zur Filtration und Stabilisierung von Getränken und flüssigen Lebensmitteln, insbesondere Bier, eingesetzt.

Ein solcher Filter beinhaltet einen Filterkessel, in welchem sich die Filterelemente befinden. In der Regel handelt es sich hierbei um kerzenförmige Filterelemente, sog. Filterkerzen, welche die für die Filtration wirksame Trennfläche von Filtratraum und Unfiltratraum bilden. Zumeist sind derartige Filterelemente an einer Lochplatte befestigt; alternative Konstruktionen sind jedoch möglich. Die eigentliche Filtration bzw. Stabilisierung wird bewirkt durch eine Anschwemmschicht von Filterhilfsmitteln oder Stabilisierungsmitteln, beispielsweise Kieselgur oder Polyvinylpolypyrollidon (PVPP), welche oftmals aus Partikeln unterschiedlicher Grösse und Gewicht bestehen, auf den Filterelementen. Dem gleichmässigen Aufbau und der gleichmässigen Stärke der Anschwemmschicht auf der gesamten Fläche der Filterelemente kommt für die Wirksamkeit des Filters entscheidende Bedeutung zu. Daher ist stets eine homogene Verteilung der Filterhilfsmittel oder Stabilisierungsmittel während des Anschwemmvorgangs angestrebt; wesentlich hierfür ist unter anderem eine geeignete Strömungscharakteristik innerhalb des Unfiltratraums. Nach erfolgter Anschwemmung der Filterelemente wird ebenfalls durch den Einlaufverteiler das zu filtrierende Medium und gegebenenfalls Filterhilfsmittel eingetragen, wobei auch hierbei eine im Sinne der gleichmässigen Beaufschlagung der Filterelemente vorteilhafte Strömungsbeeinflussung gewünscht ist. Zur Reinigung des Filters wird ein Reinigungsmedium in den Filter eingebracht, wobei die Zufuhr des Reinigungsmediums unter anderem auch über den Einlaufverteiler erfolgen kann.

Die Strömungscharakteristik wird massgeblich durch den Einlaufverteiler bestimmt. Einlaufverteiler sind in grosser Vielzahl bekannt. Die Dokumente WO 03/024563 und WO 96/14129 beschreiben bspw. Ausgestaltungen von Einlaufverteilern, bei welchen der Zuflussstrom umgelenkt in den Filterkessel eingebracht wird. Die DE-A1-100 05 828 beschreibt einen Einlaufverteiler, bei welchem der Zuflussstrom zunächst in Teilströme aufgeteilt wird, bevor die einzelnen Teilströme dann umgelenkt in den Filter eingebracht werden.

Aus dem Dokument CH-A5-688265 ist weiterhin ein Anschwemmfilter bekannt, bei welchem über einem Zufuhr-Rohr ein Verteilelement angeordnet ist. Hierbei kann in Abhängigkeit von der Zufuhrmenge beeinflusst werden, in welchen Anteilen das Medium durch die Durchlassöffnungen des Verteilelements oder den das Verteilelement umgebenden Durchlassspalt fliesst.

EP-A1-1 000 647 zeigt ein Kerzenfilter für die Anschwemmfiltration welcher am unteren Ende des Unfiltratraumes einen sich nach unten hin verjüngenden Abschnitt aufweist. In diesem sich verjüngenden Abschnitt ist ein Einlaufverteiler angeordnet.

Allen genannten Einlaufverteilern ist nachteilig gemeinsam, dass - wenn überhaupt - nur in sehr begrenztem Ausmass Einfluss auf die einmal durch die Konstruktion des Einlaufverteilers festgelegte Strömungscharakteristik genommen werden kann. Dies macht teure Umrüstungen bzw. gar einen kompletten Austausch des Einlaufverteilers notwendig, falls Änderungen der Strömungscharakteristik gewünscht oder notwendig sind.

Es ist daher eine Aufgabe der Erfindung, die Nachteile des bekannten zu vermeiden, insbesondere einen Filter für die Anschwemmfiltration und einen Einlaufverteiler bereitzustellen, bei welchen mit geringem operativem Aufwand und hoher Variabilität Anpassungen der Strömungscharakteristik vorgenommen werden können. Es ist zudem eine weitere Aufgabe der Erfindung, einen Filter für die Anschwemmfiltration und einen Einlaufverteiler bereitzustellen, welcher darüber hinaus einfach und kostengünstig herstellbar ist und welcher zu gängigen Anlagen kompatibel und möglichst universell verwendbar ist.

Erfindungsgemäss wird dies durch einen Filter für die Anschwemmfiltration, einen Einlaufverteiler für einen solchen Filter und ein Verfahren zur Regulierung des Strömungsverhaltens mit den Merkmalen der unabhängigen Patentansprüche erreicht.

Ein erfindungsgemässer Filter für die Anschwemmfiltration beinhaltet einen Filterkessel mit einem Unfiltratraum, welcher in seinem unteren Bereich einen Einlaufverteiler aufweist, wobei der Einlaufverteiler derart konstruiert ist, dass Teilbereiche des Einlaufverteilers mit separat regulierbaren Teilströmen beaufschlagbar sind. Zur Regulierung der Teilströme sind Regelungsvorrichtungen, insbesondere Ventile vorgesehen. Unter Regelungsvorrichtungen bzw. Ventilen werden hier und im folgenden alle Vorrichtungen verstanden, mittels welcher der Durchfluss durch eine Zuleitung insbesondere variabel angepasst, also innerhalb vorgegebener Spezifikationsgrenzwerte erhöht und erniedrigt werden kann. Diese Regelungsvorrichtungen können sowohl mechanisch und/oder pneumatisch und/oder elektrisch ausgelegt sein als auch beispielsweise mit einer elektronischen Steuerung versehen sein. Diese Regelungsvorrichtungen sind in den Zuleitungen, also ausserhalb des Filterkessels vorgesehen und vorzugsweise in räumlicher Nachbarschaft angeordnet, um eine leichte Regulierbarkeit zu gewährleisten. Selbstverständlich können diese Regelungsvorrichtungen mit Anzeigeinstrumenten üblicher Bauart bspw. für Drücke, Flussraten etc. kombiniert werden, um die Kontrolle der Stellung der Regelungsvorrichtungen bzw. deren Auswirkungen zu erleichtern. Dadurch lässt sich die Flüssigkeitsmenge, die von jedem Teilbereich des Einlaufverteilers in den Filterkessel eingebracht wird, nach Bedarf variieren. Es kann insbesondere auch beispielsweise ein Teilstrom nach oben und ein Teilstrom radial nach aussen gerichtet sein. Durch Erhöhung des Durchflusses des nach oben gerichteten Teilstroms wird die Hauptströmungsrichtung nach oben hin verändert. Relative Ortsangaben wie "oben" oder "unten" beziehen sich hier und im folgenden auf einen Filter in einer aufrechten Betriebsposition. Unter dem Begriff Einlaufverteiler werden hier und im folgenden alle Vorrichtungen und/oder Teile solcher Vorrichtungen verstanden, welche dem Einbringen eines zu filtrierenden Mediums in den Unfiltratraum dienen. Als nicht zum Einlaufverteiler gemäss dieser Definition gehörend werden insbesondere Vorrichtungen verstanden, welche ausschliesslich dem Trubaustrag und/oder dem Sortenwechsel dienen. Durch die separate Regulierbarkeit der Teilströme ist es nunmehr ohne grossen operativen Aufwand möglich, die Strömungscharakteristik des Einlaufverteilers zu verändern. Insbesondere kann beispielsweise auch von ausserhalb des Filterkessels Einfluss auf die Strömungscharakteristik genommen werden, ohne dass der Einlaufverteiler konstruktiv verändert und/oder die Gesamtzuflussrate verändert werden müsste. Die einzelnen Teilströme können insbesondere derart justiert werden, dass sie unterschiedlich weit vom Einlaufverteiler entfernt liegende Bereiche erreichen. Zudem kann durch eine kontrollierte gegenseitige Beeinflussung der unterschiedlichen Teilströme eine gezielte Ablenkung der Teilströme bewirkt werden. Somit ist eine leichte Justierbarkeit des Strömungsverhaltens z.B. sowohl zur Behebung einer mangelhaften Anschwemmung als aber auch beispielsweise zu Testzwecken möglich, ohne konstruktive Veränderungen am Einlaufverteiler selbst - innerhalb des Filters - vornehmen zu müssen. Als Austrittsöffnungen für das einzubringende Medium können an dem Einlaufverteiler selbstverständlich Austrittsöffnungen aller bekannten Ausgestaltungen, beispielsweise gelochte Rohre, Bohrungen, Ringspalte etc., insbesondere auch modulartig austauschbar, vorgesehen sein.

Gemäss einer bevorzugten Ausführungsform sind die Teilbereiche des Einlaufverteilers mit separaten Zuleitungen verbunden, wobei sich diese Zuleitungen vorteilhafterweise zumindest teilweise konzentrisch umschliessen. Selbstverständlich können die separaten Zuleitungen sowohl durch Aufteilung eines einzigen zentralen Zulaufs als auch durch vollständig unabhängige Zuleitungen beispielsweise auch aus verschiedenen Tanks ausgebildet sein. Durch die konzentrische Anordnung der Zuleitungen kann eine einfacher kontrollierbare, laminare Strömung innerhalb des Einlaufverteilers bewirkt werden als im Vergleich zu beipielsweise nebeneinander angeordneten Zuleitungen. Zudem ergibt sich durch die konzentrische Anordnung der Zuleitungen ein weitgehend rotationssymmetrischer Aufbau des Einlaufverteilers im Bereich der.Teilbereiche, in welchen der Austritt des Mediums erfolgt. Hierdurch kann ein Austritt des Mediums aus allen Teilbereichen des Einlaufverteilers mit weitgehend allseitiger gleicher Flussrate bewirkt werden.

In einer weiteren, bevorzugten Ausführungsform ist der Einlaufverteiler des Filters zumindest in den Austrittsbereichen des einzutragenden Mediums (M) derart rotationssymmetrisch aufgebaut, dass im Unfiltratraum ein im wesentlichen allseitig gleichförmiges Einströmverhalten des einzutragenden Mediums bewirkbar ist. Für ein allseitig gleichförmiges Einströmverhälten hat es sich insbesondere als besonders vorteilhaft erwiesen, wenn der Einlaufverteiler keine von den Seiten her in den Strömungsbereich hereinragenden Strömungshindernisse, insbesondere bspw. Zuleitungen des Einlaufverteilers aufweist. Es kommen insbesondere Einlaufverteiler in Betracht, welche in den Austrittsbereichen einen runden Querschnitt aufweisen. Dies wird vorzugsweise durch eine mittige Zuführung des einzutragenden Mediums in die Teilbereiche des Einlaufverteilers unterstützt.

In einer weiteren bevorzugten Ausführungsform ist mindestens der untere Teilbereich des Einlaufverteilers derart ausgebildet, dass ein im wesentlichen nicht behinderter Trubaustrag erzielbar ist. Dies kann beispielsweise dadurch bewirkt werden, dass ein Teilbereich des Einlaufverteilers als in einem unteren Bereich des Unfiltratraums insbesondere mittig angeordnete Öffnung im Filterkessel zum Einbringen eines Teilstromes des Mediums ausgebildet ist, wobei konzentrisch innerhalb der Öffnung weitere Zuleitungen vorgesehen sind, wodurch weitere Teilströme in den Unfiltratraum einbringbar sind. Beim Trubaustrag besteht die Notwendigkeit, die mit Trubstoffen beladenen Partikel der Anschwemmschicht möglichst vollständig aus dem Unfiltratraum herauszuschwemmen. Es hat sich gezeigt, dass dies besonders vorteilhaft dadurch unterstützt werden kann, dass ein unterer Teil des Einlaufverteilers als Öffnung im Filterboden ausgebildet ist. Diese Öffnung dient also sowohl als Teilbereich des Einlaufverteilers zum Einbringen des zu filtrierenden Mediums als auch zum Trubaustrag; über geeignete Stellungen der Regelungsvorrichtungen in den Zuleitungen bzw. dem Ablauf für den Trubaustrag kann zwischen diesen Funktionalitäten gewechselt werden. In einer weiteren bevorzugten Ausgestaltung der Erfindung ist also eine Zuleitung für einen Teilbereich des Einlaufverteilers mit einem insbesondere mit einer Regelungsvorrichtung verschliessbaren Ablauf für den Trubaustrag verbunden.

Gemäss einer weiteren Ausführungsform weisen mindestens zwei der Teilbereiche des Einlaufverteilers strukturell unterschiedliche Austrittsöffnungen und/oder eine unterschiedliche Anzahl von Austrittsöffnungen auf. Hierdurch ergibt sich neben der für jeden Teilbereich separat zu regulierenden Flussrate eine weitere Möglichkeit der Einflussnahme auf die Ausströmcharakteristik. Es kann beispielsweise vorgesehen werden, dass untere Teilbereiche des Einlaufverteilers derart ausgebildet sind, dass ein grösseres Volumen und/oder mit einer grösseren Wurfweite eingetragen werden kann. Insbesondere sind grössere Austrittsöffnungen in einem unteren Teilbereich des Einlaufverteilers für den Trubaustrag vorteilhaft.

Der Erfindungsgegenstand ist vorstehend im Gesamtzusammenhang als Teil eines Filters für die Anschwemmfiltration beschrieben worden. Die Erfindung ist jedoch nicht auf allein auf einen derartigen Filter als Ganzes zu beschränken. Die beschriebenen Vorteile der Konstruktion des Einlaufverteilers mit den erfindungsgemässen Merkmalen gelten selbstverständlich auch für den Einlaufverteiler als solchen, bei welchem Teilbereiche des Einlaufverteilers mit separat regulierbaren Teilströmen beaufschlagt werden, wobei zur Regulierung der Teilströme Regelungsvorrichtungen, insbesondere Ventile vorgesehen sind, mittels welcher der Durchfluss durch eine Zuleitung innerhalb vorgegebener Spezifikationsgrenzwerte variabel anpassbar ist.

Die Erfindung betrifft darüber hinaus auch ein Verfahren zur Regulierung des Strömungsverhaltens innerhalb eines Filters für die Anschwemmfiltration, wobei Teilbereiche eines Einlaufverteilers mit separat regulierbaren Teilströmen beaufschlagt werden. Dieses Verfahren wird besonders vorteilhafterweise durchgeführt unter Verwendung der erfindungsgemässen Filter bzw. Einlaufverteiler.

Die Erfindung wird im folgenden anhand von Zeichnungen und Ausführungsbeispielen näher erläutert, ohne dass der Gegenstand der Erfindung auf diese zu beschränken wäre. Es zeigen:
- Fig. 1:: Filter für die Anschwemmfiltration im Bereich des Einlaufverteilers mit zwei separat regulierbaren Teilströmen;
- Fig. 2:: Filter für die Anschwemmfiltration im Bereich des Einlaufverteilers mit drei separat regulierbaren Teilströmen;
- Fig. 3:: Filter für die Anschwemmfiltration im Bereich des Einlaufverteilers mit zwei separat regulierbaren Teilströmen und verbessertem Trubaustrag.

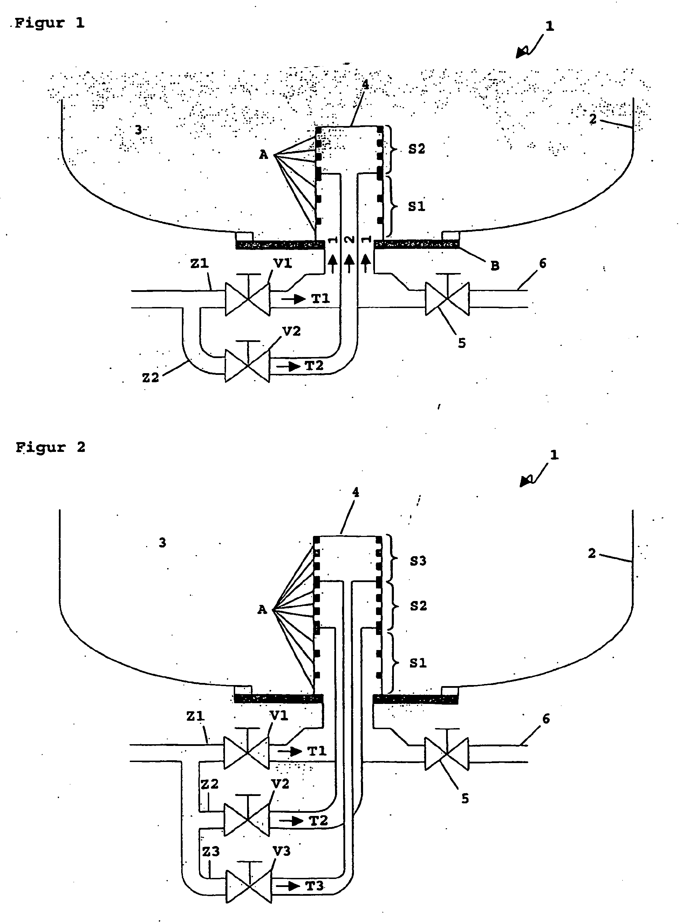

Figur 1 zeigt einen Filter 1 mit einem Filterkessel 2 im Bereich des Einlaufverteilers 4 im unteren Bereich des Unfiltratraums 3. Der Einlaufverteiler 4 weist zwei Teilbereiche S1 und S2 auf, welche jeweils über Austrittsöffnungen A bekannter Bauart verfügen, bspw. Bohrungen, Ringspalte etc. In dem Ausführungsbeispiel wird ein zentraler Zulauf aufgeteilt in zwei Zuleitungen Z1 und Z2. Die Durchflussraten durch die Zuläufe Z1 und Z2 können mittels der Regelungsvorrichtungen V1 und V2 separat geregelt werden, wodurch die Teilströme T1 und T2 separat justierbar sind. Die Zuleitungen Z1 und Z2 sind in wesentlichen Bereichen konzentrisch angeordnet, was ein gleichförmiges Einbringen des Mediums unterstützt. Ein Ablauf 6 für den Trubaustrag ist mit dem Zulauf Z1, also dem äusseren der konzentrisch angeordneten Zuläufe Z1 und Z2 verbunden, so dass der Teilbereich S1 des Einlaufverteilers 4 sowohl für das Eintragen des Mediums als auch für den Trubaustrag zu verwenden ist. Selbstverständlich ist die Erfindung nicht auf die gezeigte in der Figur 1 gezeigte Variante des Trubaustrags zu beschränken; insbesondere ist es beispielsweise auch möglich, beispielsweise exzentrisch, insbesondere ringförmig innerhalb des Bodenteils B Ablaufvorrichtungen vorzusehen, welche beispielsweise auch nicht in direkter Verbindung zu den Zuläufen ausgebildet sein können. Beim Eintragen des Mediums ist die Regelungsvorrichtung 5 geschlossen und die Strömungscharakteristik im Unfiltratraum wird durch Justierung der Teilströme T1 und T2 mittels der Regelungsvorrichtungen V1 und V2 justiert. Beim Trubaustrag ist die Regelungsvorrichtung 5 hingegen geöffnet und die Regelungsvorrichtungen V1 und V2 geschlossen. Durch die separate Justierbarkeit der Teilströme T1 und T2, welche aus den Teilbereichen S1 und S2 des Einlaufverteilers 4 austreten, kann die Strömungscharakteristik im Unfiltratraum 3 leicht über einen weiten Bereich und ohne unerwünschte konstruktive Eingriffe im Innern des Filterkessels 2 beeinflusst werden:
In Figur 2 ist eine Weiterbildung des in Figur 1 gezeigten Ausführungsbeispiels gezeigt. Im Gegensatz zu dem in Figur 1 gezeigten Ausführungsbeispiel wird zusätzlich zu den Zuläufen Z1 nd Z2 ein weiterer Zulauf Z3 eingesetzt; dementsprechend besteht der Einlaufverteiler 4 aus nunmehr drei Teilbereichen S1, S2 und S3. Das Funktionsprinzip ist ansonsten vollständig analog zu dem in Figur 1 gezeigten Ausführungsbeispiel zu verstehen. Bevorzugterweise werden die unteren Teilbereiche des Einlaufverteilers 4 von den äusseren der konzentrischen Zuläufe gespeist, d.h. Zulauf Z1 speist Teilbereich S1 (welcher zudem dem Trubaustrag dient), Zulauf Z2 speist Teilbereich S2 und Zulauf Z3 speist Teilbereich S3. Selbstverständlich können erfindungsgemäss für besondere Anwendungszwecke bei Bedarf weitere Zuleitungen und hierzu korrespondierende Teilbereiche des Einlaufverteilers 4 vorgesehen werden.

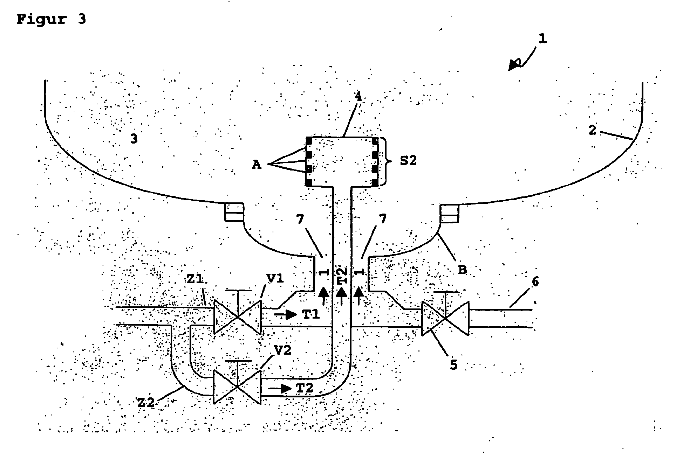

Figur 3 zeigt eine weitere Ausführungsform mit einem angeflanschten, muldenförmigen Bodenteil B. Derartige Bodenteile werden häufig verwendet, da sie den Trubaustrag vereinfachen und zudem eine sichere Restentleerung gewährleisten. In dem gezeigten Ausführungsbeispiel sind wie in Figur 1 zwei Zuleitungen Z1 und Z2 vorgesehen. Im Unterschied zu dem in Figur 1 gezeigten Ausführungsbeispiel ist jedoch ein unterer Teilbereich des Einlaufverteilers als Öffnung 7 im Filterkessel 2 (bzw. dem an den Filterkessel 2 angeflanschten Bodenteil B) ausgebildet, und Teilstrom T1 wird durch diese Öffnung 7 etwa axial in den Untiltratraum 3 eingebracht. Konzentrisch innerhalb dieser Öffnung 7 ist eine weitere Zuleitung Z2 für einen Teilstrom T2 vorgesehen, welcher den Teilbereich S2 des Einlaufverteilers speist und etwa radial eingebracht wird. Zur Beeinflussung der Strömungscharakteristik im Unfiltratraum können die einzelnen axialen bzw. radialen Teilströme T1 und T2 wiederum separat mittels der Regelungsvorrichtungen V1 und V2 einjustiert werden. Selbstverständlich kann auch diese Ausführungsform mit weiteren Zuleitungen und Teilbereichen des Einlaufverteilers 4 kombiniert werden, wie dies bereits in Figur 2 gezeigt ist.

## Patentansprüche

1. Filter (1) für die Anschwemmfiltration, beinhaltend einen Filterkessel (2) mit einem Unfiltratraum (3), welcher in seinem unteren Bereich einen Einlaufverteiler (4) aufweist, **dadurch gekennzeichnet, dass** der Einlaufverteiler (4) derart konstruiert ist, dass Teilbereiche (S1,S2,S3) des Einlaufverteilers (4) mit separat regulierbaren, insbesondere unterschiedlich gerichteten Teilströmen (T1,T2,T3) beaufschlagbar sind, wobei zur Regulierung der Teilströme (T1,T2,T3) Regelungsvorrichtungen (V1,V2,V3), insbesondere Ventile vorgesehen sind, mittels welcher der Durchfluss durch eine Zuleitung (Z1,Z2,Z3) innerhalb vorgegebener Spezifikationsgrenzwerte variabel anpassbar ist.

2. Filter (1) nach Anspruch 1,
**dadurch gekennzeichnet, dass** die Teilbereiche (S1,S2,S3) des Einlaufverteilers mit separaten Zuleitungen (Z1,Z2,Z3) verbunden sind.

3. Filter (1) nach einem der Ansprüche 1 bis 2,
**dadurch gekennzeichnet, dass** die Zuleitungen (Z1,Z2,Z3), einander zumindest teilweise konzentrisch umschliessen.

4. Filter (1) nach einem der Ansprüche 1 bis 3,
**dadurch gekennzeichnet, dass** der Einlaufverteiler (4) in den Austrittsbereichen des einzutragenden Mediums (M) derart rotationssymmetrisch aufgebaut ist, dass im Unfiltratraum (3) ein im Wesentlichen allseitig gleichförmiges Einströmverhalten des einzutragenden Mediums (M) bewirkbar ist.

5. Filter (1) nach einem der Ansprüche 1 bis 4,
**dadurch gekennzeichnet, dass** mindestens der untere Teilbereich (S1) des Einlaufverteilers (4) derart ausgebildet ist, dass ein im Wesentlichen nicht behinderter Trubaustrag erzielbar ist.

6. Filter (1) nach Anspruch 5,
**dadurch gekennzeichnet, dass** ein Teilbereich des Einlaufverteilers (S1) als in einem unteren Bereich des Unfiltratraums (3) insbesondere mittig angeordnete Öffnung (7) im Filterkessel (2) zum Einbringen eines Teilstromes (T1) des Mediums (M) ausgebildet ist, wobei konzentrisch innerhalb der Öffnung (7) weitere Zuleitungen (Z2,Z3) vorgesehen sind, wodurch weitere Teilströme (T2,T3) in den Unfiltratraum (3) einbringbar sind.

7. Filter (1) nach einem der Ansprüche 1 bis 6,
**dadurch gekennzeichnet, dass** mindestens zwei der Teilbereiche (S1,S2,S3) des Einlaufverteilers (4) strukturell unterschiedliche Austrittsöffnungen (A) und/oder eine unterschiedliche Anzahl von Austrittsöffnungen (A) aufweisen.

8. Filter (1) nach einem der Ansprüche 1 bis 7,
**dadurch gekennzeichnet, dass** die Zuleitung (Z1) mit einem insbesondere mit einer Regelungsvorrichtung (5) verschliessbaren Ablauf (6) für den Trubaustrag verbunden ist.

9. Einlaufverteiler (4) für einen Filter (1) für die Anschwemmfiltration,
**dadurch gekennzeichnet, dass** der Einlaufverteiler derart konstruiert ist, dass Teilbereiche (S1,S2,S3) des Einlaufverteilers (4) mit separat regulierbaren Teilströmen (T1,T2,T3) beaufschlagbar sind, wobei zur Regulierung der Teilströme (T1,T2,T3) Regelungsvorrichtungen (V1,V2,V3), insbesondere Ventile vorgesehen sind, mittels welcher der Durchfluss durch eine Zuleitung (Z1,Z2,Z3) innerhalb vorgegebener Spezifikationsgrenzwerte variabel anpassbar ist.

10. Verfahren zur Regulierung des Strömungsverhaltens innerhalb eines Filters (1) für die Anschwemmfiltration,
**dadurch gekennzeichnet, dass** Teilbereiche (S1,S2,S3) eines Einlaufverteilers (4) bei der Filtration mit separat regulierbaren Teilströmen (T1,T2,T3) beaufschlagt werden.

## Claims

1. Precoat filter (1), comprising a filter vessel (2) with an unfiltrate chamber (3), which has an inlet distributor (4) in its lower region, **characterized in that** the inlet distributor (4) is designed in such a way that subregions (S1, S2, S3) of the inlet distributor (4) can be subjected to partial flows (T1, T2, T3) that can be separately controlled, in particular differently directed, with control devices (V1, V2, V3), in particular valves, by means of which the flow through a supply line (Z1, Z2, Z3) can be variably adapted within prescribed specification values, being provided for controlling the partial flows (T1, T2, T3).

2. Filter (1) according to Claim 1, **characterized in that** the subregions (S1, S2, S3) of the inlet distributor are connected to separate supply lines (Z1, Z2, Z3) .

3. Filter (1) according to either of Claims 1 and 2, **characterized in that** the supply lines (Z1, Z2, Z3) concentrically enclose one another at least partially.

4. Filter (1) according to one of Claims 1 to 3, **characterized in that** the inlet distributor (4) is of a rotationally symmetrical construction in the outlet regions of the medium (M) to be introduced, in such a way that an inflow behaviour of the medium (M) to be introduced that is substantially uniform on all sides can be brought about in the unfiltrate chamber (3).

5. Filter (1) according to one of Claims 1 to 4, **characterized in that** at least the lower subregion (S1) of the inlet distributor (4) is formed in such a way that a substantially unhindered sludge discharge can be achieved.

6. Filter (1) according to Claim 5, **characterized in that** a subregion of the inlet distributor (S1) is formed as an opening (7) in the filter vessel (2), arranged in particular centrally in a lower region of the unfiltrate chamber (3), for introducing a partial flow (T1) of the medium (M), with further supply lines (Z2, Z3) being provided concentrically within the opening (7), whereby further partial flows (T2, T3) can be introduced into the unfiltrate chamber (3).

7. Filter (1) according to one of Claims 1 to 6, **characterized in that** at least two of the subregions (S1, S2, S3) of the inlet distributor (4) have structurally different outlet openings (A) and/or a different number of outlet openings (A).

8. Filter (1) according to one of Claims 1 to 7, **characterized in that** the supply line (Z1) is connected to a closable outlet (6) for the sludge discharge, which can be closed in particular with a control device (5).

9. Inlet distributor (4) for a precoat filter (1), **characterized in that** the inlet distributor is designed in such a way that subregions (S1, S2, S3) of the inlet distributor (4) can be subjected to partial flows (T1, T2, T3) that can be separately controlled, with control devices (V1, V2, V3), in particular valves, by means of which the flow through a supply line (Z1, Z2, Z3) can be variably adapted within prescribed specification values, being provided for controlling the partial flows (T1, T2, T3).

10. Method for controlling the flow behaviour inside a precoat filter (1), **characterized in that** subregions (S1, S2, S3) of an inlet distributor (4) are subjected during filtration to partial flows (T1, T2, T3) that can be separately controlled.

## Revendications

1. Filtre (1) pour la filtration à précouche, contenant une cuve de filtre (2) avec un espace (3) pour le produit non filtré, qui présente, dans sa partie inférieure, un distributeur d'alimentation (4), **caractérisé en ce que** le distributeur d'alimentation (4) est construit de telle sorte que des régions partielles (S1, S2, S3) du distributeur d'alimentation (4) soient sollicitées par des courants partiels (T1, T2, T3) réglables séparément, notamment orientés différemment, des dispositifs de régulation (V1, V2, V3), en particulier des soupapes, étant prévus pour régler les courants partiels (T1, T2, T3), au moyen desquels le débit à travers une conduite d'alimentation (Z1, Z2, Z3) peut être adapté de manière variable à l'intérieur de valeurs limites de spécification prédéterminées.

2. Filtre (1) selon la revendication 1,
**caractérisé en ce que** les régions partielles (S1, S2, S3) du distributeur d'alimentation sont connectées à des conduites d'alimentation séparées (Z1, Z2, Z3) .

3. Filtre (1) selon l'une quelconque des revendications 1 à 2,
**caractérisé en ce que** les conduites d'alimentation (Z1, Z2, Z3) sont au moins en partie mutuellement concentriques.

4. Filtre (1) selon l'une quelconque des revendications 1 à 3,
**caractérisé en ce que** le distributeur d'alimentation (4) est construit avec une symétrie de révolution dans les régions de sortie du fluide à introduire (M), de telle sorte qu'un comportement d'afflux sensiblement uniforme de tous les côtés, du fluide à introduire (M), puisse être obtenu dans l'espace (3) pour le produit non filtré.

5. Filtre (1) selon l'une quelconque des revendications 1 à 4,
**caractérisé en ce qu'**au moins la région partielle inférieure (S1) du distributeur d'alimentation (4) est réalisée de telle sorte que l'on puisse obtenir une décharge de turbidité essentiellement non affectée.

6. Filtre (1) selon la revendication 5,
**caractérisé en ce qu'**une région partielle (S1) du distributeur d'alimentation est réalisée sous forme d'ouverture (7) disposée notamment au centre dans une région inférieure de l'espace (3) pour le produit non filtré, dans la cuve du filtre (2), pour introduire un courant partiel (T1) de fluide (M), d'autres conduites d'alimentation (Z2, Z3) étant prévues concentriquement à l'intérieur de l'ouverture (7), de sorte que d'autres courants partiels (T2, T3) puissent être introduits dans l'espace (3) pour le produit non filtré.

7. Filtre (1) selon l'une quelconque des revendications 1 à 6,
**caractérisé en ce qu'**au moins deux des régions partielles (S1, S2, S3) du distributeur d'alimentation (4) présentent des ouvertures de sortie (A) structurellement différentes et/ou un nombre différent d'ouvertures de sortie (A).

8. Filtre (1) selon l'une quelconque des revendications 1 à 7,
**caractérisé en ce que** la conduite d'alimentation (Z1) est connectée à une sortie (6) pour la décharge de turbidité, pouvant être fermée notamment par un dispositif de régulation (5).

9. Distributeur d'alimentation (4) pour un filtre (1) pour la filtration à précouche,
**caractérisé en ce que**
le distributeur d'alimentation est construit de telle sorte que des régions partielles (S1, S2, S3) du distributeur d'alimentation (4) puissent être sollicitées avec des courants partiels (T1, T2, T3) pouvant être régulés séparément, des dispositifs de régulation (V1, V2, V3), en particulier des soupapes, étant prévus pour la régulation des courants partiels (T1, T2, T3), au moyen desquels le débit à travers une conduite d'alimentation (Z1, Z2, Z3) peut être adapté de manière variable à l'intérieur de valeurs limites de spécification prédéterminées.

10. Procédé pour réguler le comportement d'écoulement à l'intérieur d'un filtre (1) pour la filtration à précouche,
**caractérisé en ce que** des régions partielles (S1, S2, S3) d'un distributeur d'alimentation (4) sont sollicitées lors de la filtration avec des courants partiels (T1, T2, T3) pouvant être régulés séparément.
